# EUROPÄISCHE PATENTSCHRIFT

(11) **EP 1 587 331 B1**
(45) Veröffentlichungstag und Bekanntmachung des Hinweises auf die Patenterteilung: **06.07.2011**
(21) Anmeldenummer: 05004407.2
(22) Anmeldetag: 01.03.2005
(51) Int. Cl.: H04Q 3/00

(54) **Telekommunikationsanlage, Verbund aus Telekommunikationsanlagen, Verfahren zur Konfiguration und zum Betrieb eines solchen Verbundes sowie Software zur Identifizierung eines Kunden und einer Anlage darin**
Telecommunications exchange, combination of telecommunications exchanges, method for configuring and method for operating such a combination, as well as software for identifying a client and an exchange therein
Central de télécommunication, combinaison de centraux de télécommunication, procédé de configuration et procédé d'exploitation d'une telle combinaison, ainsi que du logiciel d'identification d'un client et d'un central dans celle-ci

(30) Priorität: 17.03.2004 DE 102004013330
(43) Veröffentlichungstag der Anmeldung: 19.10.2005
(73) Patentinhaber: Tenovis GmbH & Co. KG, 60326 Frankfurt am Main (DE)
(72) Erfinder: Rodewald, Frank, 50181 Bedburg (DE); Braun, Heinz-Mathias, 41593 Dormagen (DE); Kayser, Udo, 42285 Wuppertal (DE)
(74) Vertreter: Hafner-Tergau-Walkenhorst

(56) Entgegenhaltungen:
- WO-A-96/11544
- DE-A1- 10 025 437
- US-A- 5 539 817
- MITTERER P ET AL: "Vermietung von Vermittlungsstellenressourcen" SIEMENS TECHNIK REPORT, Bd. 3, Nr. 9, Oktober 2000 (2000-10), Seiten 117-118, XP007002260

## Beschreibung

Die Erfindung betrifft eine Telekommunikationsanlage, einen Verbund aus Telekommunikationsanlagen, ein Verfahren zur Konfiguration und ein Verfahren zum Betrieb eines solchen Verbundes sowie eine Software zur Identifizierung eines Kunden und einer Anlage darin, wobei mehrere Kunden mit jeweils einer Vielzahl von Endgeräten den Verbund unabhängig voneinander nutzten können.

Telefonanlagen stellen den an Sie angeschlossenen Teilnehmern bzw. Endgeräten Leistungsmerkmale zur Verfügung. Große private Telekommunikationsanlagen erreichen heute Ausbaustufen von über 10.000 Teilnehmern. Werden diese Telekommunikationsanlagen vernetzt, z.B. über QSIG, so können Kommunikationssysteme entstehen, deren beherrschbare Teilnehmerzahl nur noch durch die maximal zulässige Länge der signalisierbaren Rufnummern begrenzt wird. Telekommunikationsanlagen dieser Größenordnungen bieten nicht nur ein breites Spektrum von vermittlungstechnischen Leistungsmerkmalen, welches die Möglichkeiten kleiner Telekommunikationssysteme bei Weitem übersteigt, sie bieten darüber hinaus Zugang zu serverbasierten Applikationen wie CTI (Computer Telephony Integration), CRM (Customer Relations Management) und Call Center.

Die Leistungsmerkmale der Telefonanlagen sind unterschiedlich aufwändig zu implementieren. Komplizierte vermittlungstechnische Leistungsmerkmale und serverbasierte Applikationen erfordern einen großen Realisierungsaufwand, der sich für kleinere Anschlusszahlen oft als unwirtschaftlich erweist, so dass derartige Leistungsmerkmale in kleinen Anlagen nicht oder nur selten zu finden sind. Es bestehen daher Ansätze, die Leistungsmerkmale großer Telekommunikationsanlagen für viele Kunden mit jeweils eigenen Teilnehmergruppen zentral bereitzustellen und so die Kosten der Leistungsmerkmale pro Teilnehmer in wirtschaftliche Bereiche zu führen. Zwei bekannte Ansätze dazu sind der Centrex Service im öffentliche Netz der Deutschen Telekom AG in Deutschland, sowie der "Multi-Company"-Ansatz im Bereich der privaten Telekommunikationsanlagen.

Bei dem Dienst Centrex werden typische Leistungsmerkmale privater Telefonanlagen vom öffentlichen Netzbetreiber für viele Kunden zentral bereitgestellt. Der Dienst benutzt Eigenschaften privater Telefonanlagen und Eigenschaften des öffentlichen Netzes. Die Netzwerkintelligenz, d.h. die Steuerung der Leistungsmerkmale ist im öffentlichen Netzwerk und die Schnittstelle zwischen öffentlichem Netzwerk und privatem Netzwerk ist an einem virtuellen Ort mit der Funktion eines Gateways innerhalb des öffentlichen Netzes. Die Kopplung öffentlicher Vermittlungsstellen zu einem Verbund, dem öffentlichen Netzwerk, ist standardisiert und bekannt.

Der Multi-Company Ansatz im Bereich privater Netze basiert auf einer Telefonanlage an einem einzelnen Ort. In einer großen Einrichtung wird das Kommunikationssystem des Gebäudes oder der Einrichtung betrieben durch einen Netzwerkbetreiber wie die Anmelderin oder wie die Regus-Corporation, UK. Die Netzwerk-Intelligenz ist in dem privaten Netzwerk auf dem Campus und der Übergang zum öffentlichen Netzwerk ist auch auf dem Campus. Das private Netzwerk kann mehrere private Telefonanlagen enthalten. Mehrere rechtlich unabhängige Kunden oder Mandanten können auf einer Telefonanlage eingerichtet werden. Ein Administrator des Netzwerkbetreibers der Einrichtung, der die Telefonanlage betreibt, implementiert vom Mandanten ausgewählte Leistungsmerkmale und stellt sie den Teilnehmern des Mandanten bereit. Die privaten Telefonanlagen nach dem Stand der Technik sind nicht konzipiert für eine derartige Benutzung, und daher ist es nicht möglich, alle möglichen Kombinationen von Leistungsmerkmalen für die einzelnen Mandanten individuell und simultan einzurichten. Daher bietet der Betreiber des Campus Netzwerkes Pakete von Leistungsmerkmalen an, die simultan eingerichtet und betrieben werden können. Bei einem bestehenden System ist die Anzahl der einrichtbaren Firmen auf 64 begrenzt und die Telefonanlage kennt den Begriff der Firma bzw. des Mandanten oder Kunden nicht. Dort erfolgt die vermittlungstechnische Abgrenzung der Kunden voneinander durch Anpassung bestehender Leistungsmerkmale, z.B. die Bildung von Verkehrsgruppen.

Zum Sprachgebrauch sei angemerkt, dass im Bereich der Telefonierdienste "Kunde" und "Mandant" sich entsprechen, wobei deren jeweils mehreren Teilnehmern jeweils ein Endgerät entspricht, wobei es aus der Perspektive der Anlage eine eindeutige Teilnehmeranschlussleitung zur Identifikation des Endgeräts und somit des Teilnehmers gibt. In der Vermittlungstechnik ist es üblich, den Begriff Teilnehmer gleichwertig für das Endgerät zu verwenden. Mit Hilfe eines Rufnummernplans wird der Zusammenhang zwischen der Teilnehmeranschlußleitung eines Endgeräts und der internen Rufnummer des Teilnehmers hergestellt.

Des weiteren ist es bekannt, Telekommunikationsanlagen in einem Verbund von Telekommunikationsanlagen zu betreiben, wobei dieser Verbund durch digitale Verbindungsleitungen zwischen den einzelnen Telekommunikationsanlagen hergestellt wird. Als vermittelndes Protokoll wird auf diesen Leitungen entweder ein standardisiertes Protokoll (QSIG, DPNSS1) oder ein proprietäres Protokoll (TNET, CORNET...) eingesetzt. Telekommunikationsanlagen in einem Verbund haben Vorrichtungen, um die Benutzung der Leitung pro Verbindung und Verbindungsdauer zu tarifieren. Nach dem Stand der Technik besteht ein Verbund aus privaten Telekommunikationsanlagen, die alle einem einzigen Kunden zugeordnet sind.

Den bekannten Lösungen zum mandantenbezogenen Betrieb aus dem Bereich der privaten Telekommunikationsanlagen ist die Einschränkung gemeinsam, dass die Mandantenfähigkeit auf die einzelne Telekommunikationsanlage beschränkt ist. EP 0 557 644 A2 offenbart solche Lösung. Zwar könnten diese Anlagen auch in einem Verbund von Telekommunikationsanlagen betrieben werden, aber eine verbundweite Funktion des Mehr-Kundenbetriebs ist nicht möglich. Es können z.B. Teilnehmer des selben Kunden nicht als diesem Kunden zugehörig erkannt werden, wenn die Endgeräte an verschiedenen Telekommunikationsanlagen des Verbundes angeschlossen sind. Dies ist insbesondere nachteilig, weil Verbindungen zwischen Endgeräten des selben Kunden anders behandelt werden als solche zwischen Endgeräten verschiedener Kunden. So werden Gespräche zwischen Endgeräten verschiedener Kunden wie Amtsgespräche betrachtet. Viele Firmen unterhalten jedoch neben ihrem Hauptsitz noch mehrere geografisch verteilte Niederlassungen, wobei viele Außenstellen häufig unter dem Aspekt der Endgerätezahl Größen aufweisen, die eine Integration eines solchen Standorts in eine mandantenfähige Telekommunikationsanlage vorteilhaft erscheinen lassen.

Es ist daher die Aufgabe der vorliegenden Erfindung, ein Kommunikationssystem und Kommunikationsdienste bereitzustellen, welche in einem Verbund von Telekommunikationsanlagen mandantenfähig sind, wobei Kunden mit jeweils eigenen Teilnehmern völlig unabhängig voneinander eingerichtet, bedient und verwaltet werden, die Endgeräte eines Kunden an beliebige Telekommunikationsanlagen des Verbundes angeschlossen werden.

Diese Aufgabe wird durch die Verfahren und eine Vorrichtung mit den Merkmalen der unabhängigen Patentansprüche gelöst. Bevorzugte Ausgestaltungen der Erfindung ergeben sich aus den abhängigen Ansprüchen.

Zum Sprachgebrauch sei angemerkt, dass unter einem privaten Telekommunikationsnetz eine einzelne Telekommunikationsanlage mit ihren Amtsleitungen und den an die Telekommunikationsanlage angeschlossenen Endgeräten verstanden wird. Unter "Vernetzung von Telekommunikationsanlagen" wird die Bildung eines Verbundes solcher einzelner Telekommunikationsanlagen (Telekommunikationsanlagenverbund) verstanden, wobei dieser Verbund durch digitale Verbindungsleitungen zwischen den einzelnen Telekommunikationsanlagen hergestellt wird. Als vermittelndes Protokoll wird auf diesen Leitungen entweder das standardisierte QSIG-Protokoll oder ein proprietäres Protokoll (TNET, CORNET...) eingesetzt.

Die Anmelderin hat eine private Vermittlungsanlage entwickelt, bei der mehrere Kunden mit jeweils einer Vielzahl von Endgeräten die Vermittlungsanlage unabhängig voneinander nutzten können, so als wäre nur ein einziger Kunde auf der privaten Vermittlungsanlage eingerichtet. Diese private Vermittlungsanlage stellt virtuelle private Telekommunikationsanlagen mit jeweils einer eigenen Datenhaltung und einer eigenen Datenzugriffsstruktur für jeden Kunden bereit. Eine solche virtuelle Anlage kann jedem Kunden bzw. Mandanten zugeordnet werden, und damit sind dessen Teilnehmer unabhängig und organisatorisch getrennt von den Teilnehmern anderer Kunden. Jeder Kunde hat einen kundenindividuell frei gestaltbaren durch den Kunden einrichtbaren Kunden-Rufnummernplan zur Verfügung. Ein solches Kommunikationssystem kann auf der Basis einer privaten Telekommunikationsanlage eine beliebige Anzahl von Kunden mit jeweils einer beliebigen Anzahl von Teilnehmern vorsehen. Innerhalb der virtuellen Anlage eines Kunden sind Leistungsmerkmale sowohl kundenweit als auch individuell für dessen Teilnehmer einrichtbar. Dies geschieht weitgehend durch einen Administrator des Kunden selber, z.B. die Vergabe von Teilnehmerberechtigungen, insbesondere im Zusammenhang mit Amtsverkehr oder bei der Nutzung von Leistungsmerkmalen. Die Einrichtung und Änderung von einigen Daten innerhalb der virtuellen Anlage bleibt dem Systemadministrator vorbehalten. Dies sind z.B. die Konfigurierung des Verkehrs zwischen virtuellen Anlagen verschiedener Kunden und das Freischalten und Sperren von Hardwareadressen. In dieser privaten Vermittlungsanlage ist jedem Kunden eine Kundenidentifikationsnummer zugeordnet. Die Kundenidentifikationsnummer ermöglicht die kundenindividuelle Einrichtung virtueller Telefonanlagen.

Die vorliegende Erfindung betrifft die Vernetzung von privaten Telekommunikationsanlagen zur Bildung eines Verbundes. Die Erfindung ist unabhängig von der Ausgestaltung der oben beschriebenen mandantenfähigen privaten Telekommunikationsanlage. Eine erfindungsgemäße Telekommunikationsanlage zur Bildung eines erfindungsgemäßen Verbundes mit mindestens einer weiteren Telekommunikationsanlage hat einen Speicher zum Speichern von Daten über an die mindestens eine weitere Telekommunikationsanlage des Verbundes angeschlossenen Teilnehmer von Kunden, die den Verbund gemeinsam nutzen, nämlich auswertungsrelevante Teile von Rufnummern von an jeder weiteren Anlage angeschlossenen Teilnehmern, eine Anlägenidentifikationsnummer AID der weiteren Anlage, an der die jeweiligen Teilnehmer mit der jeweiligen Rufnummer angeschlossen sind, und einer Kundenidentifikationsnummer KID, die den Kunden des jeweiligen Teilnehmers identifiziert. Dabei ist der auswertungsrelevante Teil der Rufnummer innerhalb der erfindungsgemäßen Telekommunikationsanlage eindeutig. Er ermöglicht nämlich, allein durch Auswertung von Rufnummern AID und KID eindeutig zu bestimmen. Der auswertungsrelevante Teil einer Rufnummer zur Bildung der KID muß dabei nicht mit dem auswertungsrelevanten Teil einer Rufnummer zur Bildung der AID übereinstimmen.

Rufnummern werden im Allgemeinen beginnend mit der ersten Ziffer von links nach rechts bis zur letzten Ziffer lückenlos ausgewertet. Häufig sind als auswertungsrelevante Teile von Rufnummern die Zugangs-Rufnummer eines Kunden bezüglich des öffentlichen Netzes ausreichend, weil eben alle Nebenstellennummern zu dieser Zugangs-Rufnummer ebenfalls zu diesem Kunden gehören. Häufig sind alle Nebenstellennummern zu einer Zugangs-Rufnummer eines Kunden an einer einzigen Telekommunikationsanlage angeschlossen. Jedenfalls reicht meist ein Teil der E.164 Rufnummer aus, um AID und KID innerhalb einer erfindungsgemäßen Telekommunikationsanlage eindeutig zuordnen zu können. Mit einer erfindungsgemäßen Telekommunikationsanlage kann auch eine einem einzigen Kunden zugeordnete herkömmliche private Nebenstellenanlage in den Verbund integriert werden. Diese wird einfach an eine erfindungsgemäße Telekommunikationsanlage angeschlossen, in der erfindungsgemäßen Telekommunikationsanlage bekommt die herkömmliche private Nebenstellenanlage eine AID sowie der Kunde eine KID und ihre Zugangs-Rufnummer wird zusammen mit AID und KID abgelegt.

Mit mandantenfähigen Telekommunikationsanlagen ist es möglich, Kunden mit wenigen Teilnehmern kostengünstig den Service großer Telekommunikationsanlagen anzubieten. Diese Erfindung ermöglicht die Bildung eines Verbundes von mandantenfähigen Telekommunikationsanlagen. Weiterhin ist die Einbeziehung von bestehenden Telekommunikationsanlagen in solch einen Verbund nun mit geringem Aufwand möglich, und zwar ohne die Signalisierung auf den Verbundleitungen ändern zu müssen, insbesondere entfällt eine Übertragung der KID und der AID. So können kostengünstig Telekommunikations-Dienstleistungen für kleine Firmen an verteilten Standorten erbracht werden.

Mit der eindeutigen Beziehung zwischen auswertungsrelevantem Teil der Rufnummer und KID kann die erfindungsgemäße Telekommunikationsanlage zu jedem Verbindungswunsch feststellen, ob ein kundeninterner Verkehr vorliegt. Mit einer Kunde zu Kunde Routing Tabelle, die zu jeder Kundenidentifikationsnummer KID diejenigen Kundenidentifikationsnummern KID aufweist, für deren zugeordnete Teilnehmer der Kunden ein verbundinterner Verkehr erlaubt ist, kann die erfindungsgemäße Telekommunikationsanlage weiterhin bestimmen, ob bei einem Verbindungswunsch eine Verbindung zu einem öffentlichen Netzwerk erforderlich ist. Im Zusammenhang mit dieser Erfindung bedeutet "verbundinterner Verkehr", dass auschließlich Resourcen des Verbundes für eine Verbindung benutzt werden.

Weitere vorteilhafte Ausführungsformen ergeben sich aus den weiteren Unteransprüchen und aus der nachfolgenden Beschreibung eines bevorzugten Ausführungsbeispiels, das anhand der Abbildungen näher erläutert wird. Hierbei zeigen:
FIG. 1 eine schematische Darstellung einer vemetzbaren privaten Telekommunikationsanlage gemäß der Erfindung;
FIG. 2 eine schematische Darstellung von Zugriffen einer Vermittlungssoftware auf eine Datenbank eines Telekommunikationssystems gemäß der Erfindung;
FIG. 3 eine schematische Darstellung eines Verbundes aus privaten Telekommunikationsanlage gemäß der Erfindung;
FIG. 4 ein Ablaufdiagramm eines Verfahrens zur Konfiguration eines Verbundes aus privaten Nebenstellenanlagen gemäß der Erfindung;
FIG. 5 ein Ablaufdiagramm eines Verfahrens zum Betrieb eines Verbundes aus privaten Nebenstellenanlagen gemäß der Erfindung bei Erhalten eines Anrufes aus interner Quelle
FIG. 6 ein Ablaufdiagramm eines Verfahrens zum Betrieb eines Verbundes aus privaten Nebenstellenanlagen gemäß der Erfindung bei Erhalten eines Anrufes aus externer Quelle; und
FIG. 7 ein Ablaufdiagramm eines Verfahrens zum Betrieb eines Verbundes aus privaten Nebenstellenanlagen gemäß der Erfindung bei Erhalten eines Anrufes von einer kommend belegten Verbundleitung.

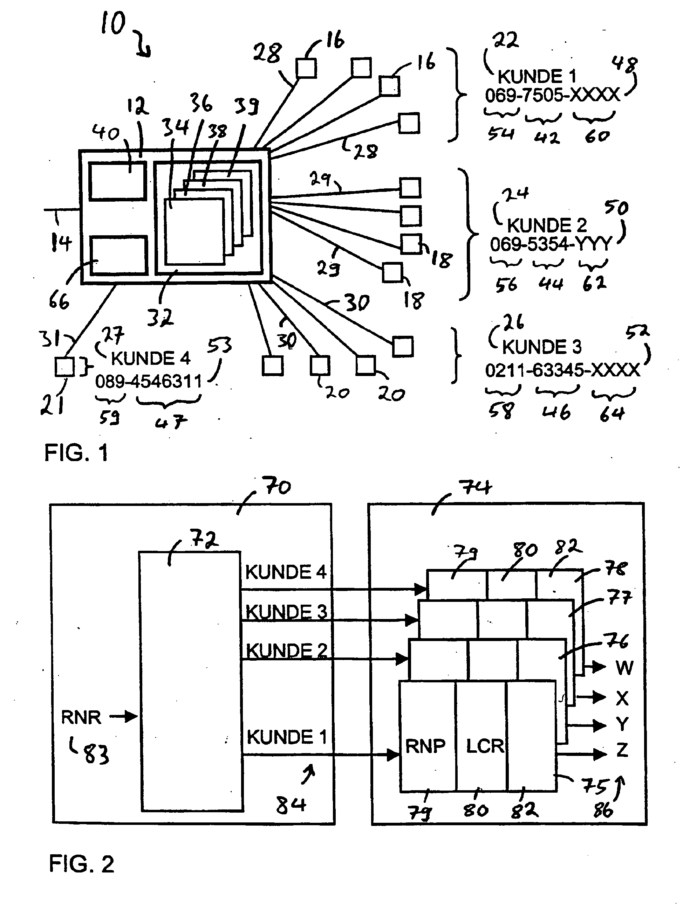

FIG. 1 zeigt schematisch ein erfindungsgemäßes Kommunikationssystem 10 mit einer zentralen Kommunikationsanlage 12, die über eine Leitung 14 an ein öffentliches Netz angeschlossen ist. An die Kommunikationsanlage 12 sind Endgeräte 16, 18, 20, 21, die Teilnehmer verschiedener Kunden 22, 24, 26, 27 repräsentieren, über Leitungen 28, 29, 30, 31 angeschlossen. Die Endgeräte 16, 18, 20, 21 sind beliebige in einem Telekommunikationsnetz betreibbare Endgeräte wie analoges Telefon, ISDN-Telefon, Systemtelefon, IP-Telefon, Faxgerät, Anrufbeantworter. Zur Verwaltung der voneinander völlig unabhängigen Kunden 22, 24, 26, 27 weist die Kommunikationsanlage 12 eine Einrichtung 32 zur Bereitstellung eines kundenindividuell frei gestaltbaren Rufnummernplans auf. Diese Einrichtung zur Bereitstellung des Rufnummernplans 32 basiert auf einer privaten Telefonanlage und ist zur Trennung von den verschiedenen Kunden zugeordneten Datenbereichen eingerichtet. Aufgrund der Trennung der verschiedenen Datenbereiche wirkt die Einrichtung zur Bereitstellung des Rufnummernplans 32 als jeweils eine virtuelle private Telefonanlage 34, 36, 38, 39 für jeden der Kunden 22, 24, 26, 27.

Die Endgeräte 16, 18, 20, 21 beziehungsweise Teilnehmer verschiedener Kunden 22, 24, 26, 27 bilden jeweils eine Gruppe von Teilnehmern des jeweiligen Kunden, wobei die Kunden beziehungsweise deren Gruppen das Kommunikationssystem 10 unabhängig voneinander nutzen mit einem kundenindividuell frei gestaltbaren durch den Kunden einrichtbaren Kunden-Rufnummernplan.

Die zentrale Kommunikationsanlage 12 weist weiterhin eine Einrichtung 40 zum Einrichten einer kundenindividuellen Zugangsrufnummer gemäß E.164 bezüglich des öffentlichen Netzwerkes aus, unter der der Kunde über das öffentliche Netz anwählbar ist. Die Wahl ist die Übermittlung der eindeutigen E.164 Rufnummer. Eine weltweit eindeutige Rufnummer 48, 50, 52, 53 besteht gemäß E.164 aus einer Zugangs-Rufnummer eines Kunden bezüglich des öffentlichen Netzes und gegebenenfalls einer internen Teilnehmernummer 60, 62, 64.. Das Attribut "intern" bedeutet, dass dieser Teil einer E.164 Rufnummer innerhalb einer Telekommunikationsanlage für vermittlungstechnische Steuerungsaufgaben ausreichend ist. Die Zugangs-Rufnummer bezüglich des öffentlichen Netzes besteht aus der Rufnummer des Kunden 42, 44, 46, 47 im jeweiligen Ortsnetz und gegebenenfalls zusätzlichen Rufnummern 54, 56, 58, 59 für das Ortsnetz und gegebenenfalls das Land des Kunden, um innerhalb des öffentlichen Netzes Eindeutigkeit zu erzielen. Der Kunde 4 weist die Besonderheit auf, dass dieser Kunde 4 nur ein Endgerät 21 betreibt, und daher die Rufnummer 53 des Kunden 4 mit der Zugangs-Rufnummer bezüglich des öffentlichen Netzes 59+47 identisch ist. In diesem Fall ist keine Unterscheidung von Teilnehmern des Kunden notwendig. Bei Kunden mit mehreren Teilnehmern wie 22, 24, 26 werden die Teilnehmer identifiziert durch Teilnehmernummern 60, 62, 64.

Einerseits ist ein Endgerät mit seiner internen Rufnummer innerhalb einer Telekommunikationsanlage eindeutig identifizierbar, andererseits ist bei der Aufteilung einer Telekommunikationsanlage in mehrere virtuelle Telekommunikationsanlagen die interne Rufnummer nicht mehr ausreichend, da eine interne Rufnummer bei mehreren Kunden auftreten kann. Daher wird in der oben vorgestellten Telekommunikationsanlage jedes Endgerät unter der Rufnummer verwaltet, die ihm im Rufnummernplan E.164 zugewiesen ist.

Beispielsweise existieren sowohl im Unternehmen des Kunden A als auch im Unternehmen des Kunden B Nebenstellen mit der kunden-internen Rufnummer "4711". Kunde A hat den Zugangscode "5354" im Ortsnetz und Kunde B hat den Zugangscode "7505". Die Telekommunikationsanlage ist in Deutschland (Intemationaler Zugangscode "49") in der Stadt Frankfurt (Ortsnetzkennziffer "69") an das öffentliche Netz angeschaltet. Daraus ergibt sich für die Nebenstelle "4711" jeweils beim Kunden A die innerhalb der realen Telekommunikationsanlage eindeutige Rufnummer: + 49 69 5354 4711, und beim Kunden B die innerhalb der realen Telekommunikationsanlage eindeutige Rufnummer: + 49 69 7505 4711.

Demzufolge ist es innerhalb einer einzelnen Telekommunikationsanlage möglich, eine Kundenzugehörigkeit aus einer Rufnummer eindeutig zu bestimmen, wobei sich aus der Konfiguration eines Kunden ebenfalls eindeutig dessen Zugangsrufnummer ableiten lässt. Eine Hardware-Konfiguration bedeutet dabei die hardwaremäßige Zuordnung eines Teilnehmers bzw. Endgeräts zu dessen Zugangsrufnummer. Jedem Kunden einer Telekommunikationsanlage wird in der Konfiguration der Telekommunikationsanlage ein Integer-Wert zugewiesen, der als Kundenidentifikationsnummer KID bekannt ist.

Die Einrichtung 40 ermöglicht es, dass jeder Kunde 22, 24, 26, 27 eine eigene, von den anderen völlig unabhängige Rufnummer 42, 44, 46, 47 bezüglich des öffentlichen Netzes aufweist. Diese Rufnummer bezüglich des öffentlichen Netzes ist unabhängig von der Anzahl und Art der Leitungen 14, mit denen das Kommunikationssystem 10 mit dem öffentlichen Netz verbunden ist. Zur Vereinfachung der Darstellung sind als Kennung bezüglich des öffentlichen Netzes nur nationale Kennziffern von Ortsknoten im Fernwahlnetz der Deutschen Telekom AG 54, 56, 58, 59 angegeben. Die Nummern innerhalb des kundeneigenen Rufnummernplans sind kundenindividuell vergeben, wobei identische oder teilidentische Rufnummernblöcke, gegebenenfalls unterschiedlicher Länge, d.h. Ziffernzahl, innerhalb derselben physikalischen Kommunikationsanlage 12 vergebbar sind. So hat der Kunde 24 einen Rufnummernplan mit 3-stelligen Rufnummern 62. Die Kunden 22 und 26 haben großenteils identische Rufnummernpläne mit 4-stelligen Rufnummern 60 und 64. Innerhalb der Kommunikationsanlage 12 sind Bereiche mit Kundendaten für verschiedene Kunden voneinander getrennt durch eine Kundenidentifikationsnummer KID gespeichert. Anhand dieser Kundenidentifikationsnummer werden die Kunden unterschieden, so dass unter Hinzunahme der Kundenidentifikationsnummer als Identifier teilidentische Kundenrufnummernpläne wiederum eindeutig werden.

Die Kommunikationsanlage 12 weist weiterhin eine Einrichtung 66 zur Analyse und Zuordnung von Rufnummern auf. Diese Einrichtung 66 dient der Ermittlung der Kundenidentifikationsnummer aus einer Rufnummer eines eingehenden Rufs. Diese Rufnummer ist weltweit eindeutig und wird bei einem ankommenden Ruf von dem öffentlichen Netzwerk als Ziel-Rufnummer mit übertragen. Die Einrichtung 66 wirkt weiterhin als Einrichtung zur Ermittlung einer Hardware-Adresse des Zielendgeräts aus der weltweit eindeutigen Rufnummer mittels der Kundenidentifikationsnummer bei einem Ruf aus externer Quelle. Nachdem die Einrichtung 66 die Rufnummer analysiert hat und die Kundenidentifikationsnummer bestimmt hat, kann sie über die Einrichtung zur Bereitstellung des Rufnummernplans 32 auf den zur Kundenidentifikationsnummer gehörenden Rufnummerplan zugreifen und anhand der Teilnehmernummer 60, 62, 64 die Hardware-Adresse des gewünschten Teilnehmeranschlusses herausfinden und die Kommunikationsanlage 12 kann den eingehenden Ruf zu dem gewünschten Teilnehmer vermitteln. Die Einrichtung zur Analyse und Zuordnung 66 wirkt bei einem Ruf aus interner Quelle als eine Einrichtung zur Ermittlung einer Kundenidentifikationsnummer aus der Hardwareadresse des rufenden Teilnehmers. Wenn die Kundenidentifikationsnummer des rufenden Teilnehmers, und damit der Kunde zu dem der Teilnehmer gehört, bekannt ist, kann die gewählte Nummer entsprechend der Regeln, die dieser Kunde aufgestellt hat, analysiert werden und das Gespräch nach intern oder extern vermittelt werden.

FIG. 2 zeigt schematisch das Zusammenwirken einer Vermittlungssoftware (Call Control) und der Datenhaltung in einem Kommunikationssystem gemäß der Erfindung. Der hier beschriebene Teil der Vermittlungssoftware betrifft die Analyse und Zuordnung von Rufnummern und den Rufnummernplan und damit die Einrichtungen 66 und 32 aus FIG. 1. Die Datenablage betrifft entsprechend den Rufnummernplan und die kundengetrennte Datenablage entsprechend der virtuellen Telekommunikationsanlagen 34, 36, 38, 39 in FIG. 1.

Innerhalb der Vermittlungssoftware 70 greift eine Dispatcher-Software 72 auf eine Datenbank 74 zu. Zunächst wird die Dispatcher-Software 72 beschrieben. Die Dispatcher-Software 72 dient der Zuordnung von Rufnummer bzw. Rufnummersegmenten zu AID und KID und umgekehrt. In der Datenbank 74 sind die zu den Kunden gehörenden Daten getrennt voneinander und durch die Kundenidentifikationsnummer identifizierbar abgelegt, jeweils in Bereichen 75, 76, 77, 78. Jeder der Kundenbereiche 75, 76, 77, 78 enthält den entsprechenden Rufnummerplan 79 mit einem Verweis auf die Hardwareadresse(n) der Teilnehmerleitungen, ein kundenindividuelles Least-Cost-Routing (LCR) 80 und weitere kundenspezifische Daten 82. Die Arbeitsweise der Dispatcher-Software 72 wird am Beispiel eines eingehenden Rufes aus externer Quelle beschrieben. Die eingehende Ziel-Rufnummer 83 wird vom Dispatcher 72 analysiert und die Kundenidentifikationsnummer ermittelt. Anhand dieser Kundenidentifikationsnummer 84 wird nun auf die Datenbank 74 zugegriffen, und zwar nur auf den entsprechenden der Bereiche 75, 76, 77, 78. Bei diesem Zugriff wird aus dem Teilnehmerabschnitt der ankommenden Rufnummer 83, in FIG. 1 mit 60, 62, 64 bezeichnet, und der Kundenidentifikationsnummer 84 aus dem Rufnummernplan 79 der entsprechende Teilnehmer ermittelt und die zugehörige Adresse der Teilnehmeranschlussleitung ermittelt und als Hardwareadresse 86 ausgegeben. Im Fall des Kunden 4 in FIG. 1 mit nur einem Endgerät 21 ist der einzige Teilnehmer bereits eindeutig identifiziert und es wird lediglich die zugehörige Adresse der Teilnehmeranschlussleitung in 80 ermittelt und als Hardwareadresse 86 ausgegeben. Damit kann ein anderer Teil der Vermittlungssoftware 70 den ankommenden Ruf zu dem gewünschten Teilnehmer verbinden und diese Verbindung besteht bis einer der Gesprächsteilnehmer das Gespräch beendet.

Bei einem Anruf aus interner Quelle ermittelt der Dispatcher 72 mit Hilfe der Datenbank aus der Leitungsadresse des rufenden Teilnehmers die Kundenidentifikationsnummer und damit den Kunden und analysiert daraufhin die gewählte Rufnummer und ermittelt, ob es sich um einen internen oder externen Anruf handelt. Von der Datenhaltung und Vermittlungstechnik her gelten alle Anrufe zu anderen Kunden und nach außerhalb als externe Anrufe. Ein anderer Teil der Vermittlungssoftware 70 kann nun mit den analysierten Rufnummerndaten die Verbindung entweder nach extern oder zu einem anderen Teilnehmer desselben Kunden herstellen.

In einem Verbund aus Telekommunikationsanlagen sind die den Verbund bildenden Telekommunikationsanlagen in der Regel geografisch verteilt. Diese Verteilung kann sich auf Teile eines Ortsnetzes, mehrere Ortsnetze oder mehrere Länder erstrecken. Da die weltweite Zuteilung von E.164 Rufnummern für Telekommunikationsanlagen mit eigenem Amtzugang streng geografisch erfolgt, erhalten die einzelnen Standorte von Kunden, die an verschiedenen Telekommunikationsanlagen eines Verbundes angeschlossen sind, unterschiedliche Zugangsrufnummern. Ist für die Endgeräte eines Kunden in einer Telekommunikationsanlage eines Verbundes kein Amtzugang verfügbar, so werden die Amtsgespräche über eine Telekommunikationsanlage des Verbundes mit Amtzugang geführt. In diesem Fall haben alle Endgeräte eines Kunden, deren Zugang zum öffentlichen Telekommunikationsnetz über diese Telekommunikationsanlage erfolgt, die Kunden-Zugangsrufnummer der Telekommunikationsanlage mit dem Amtzugang. Eine Aussage darüber, in welcher Telekommunikationsanlage des Verbundes ein Endgerät angeschlossen ist, kann in diesem Fall nur durch die zusätzliche Auswertung von Teilen oder der ganzen Ziffernfolge der internen Endgeräterufnummern getroffen werden. Erfindungsgemäß wird daher vorgeschlagen, in einer Telekommunikationsanlage jeder Telekommunikationsanlage im Telekommunikationsanlagenverbund eine Anlagenidentifikationsnummer AID zuzuweisen. Werden Standorte eines Kunden über eine allen Standorten gemeinsame Zugangsrufnummer erreicht, muss ggf. ein Teil der internen Rufnummer zur Bestimmung des Anlagenidentifikationsnummer AID zusätzlich ausgewertet werden. Die Anlagenidentifikationsnummer hat vorteilhafterweise die Struktur eines Integer-Wertes und wird einmal in den Konfigurationsdaten der Anlageabgelegt. Zur vollständigen Beschreibung eines Endgerätes gehört jetzt die Kombination von Kundenidentifikationsnummer,Anlagenidentifikationsnummer und interner Rufnummer. Eine erfindungsgemäße Telekommunikationsanlage verfügt somit über
- die Kenntnis aller Zugangsrufnummern aller Kunden im Verbund,
- die Kenntnis zusätzlich zur Anlagenidentifikationsnummer-Bestimmung notwendiger Ziffernfolgen der internen Rufnummern von Endgeräten,
- eine Vorrichtung, die aus einer Rufnummer Kunden- und Anlagenidentifikationsnummer ermitteln kann, und
- eine Vorrichtung, die eine kundenbezogene Internrufnummer eines Endgeräts unter Verwendung von Kundenidentifikationsnummer und Anlagenidentifikationsnummer in eine weltweit eindeutige E.164-Nummer umwandeln kann. Eine Nebenstellenrufnummer kann nun auch bezüglich eines Kunden mehrfach auftreten und wird nur durch ihre Zuordnung zu einer Telekommunikationsanlage im Verbund für diesen Kunden eindeutig.

Die in FIG. 1 und FIG. 2 beschriebene Telekommunikationsanlage weist ein Datenbanksystem und einen Dispatcher auf, mit Hilfe derer aus einer Rufnummer oder der Hardwareadresse der Anschlussleitung eines Endgeräts eine Kundenidentifikationsnummer ermittelt werden kann. Von den Protokollen, die bei der Bildung eines Telekommunikationsanlagen-Verbundes zum Einsatz kommen, sind Rufnummern für das Routing (bei QSIG und TNET: Called-Party-Number) und Rufnummern für die Identifizierung (bei QSIG und TNET: Calling Party Number, Connected Number) bekannt.

Erfindungsgemäß wird vorgeschlagen, Datenbanksystem und Dispatcher für Verbund-Aufgaben derart auszugestalten, dass Kunden- und Anlagenidentifikationsnummer aus auswertungsrelevanten Teilen einer E.164-Rufnummer bzw. der Hardwareadresse der Anschlussleitung eines Endgeräts ermittelt werden. Dabei werden Rufnummern von Teilnehmern, die an anderen Anlagen als die Anlage des Dispatchers angeschlossen sind, einbezogen.

Die Rufnummerninformationen, die auf den Verbundleitungen ausgetauscht werden, haben in einer bevorzugten Ausgestaltung grundsätzlich E.164 Format.

Der Dispatcher verwendet zur Bestimmung des Kunden vorzugsweise Identifizierungsrufnummern. Wenn Identifizierungsrufnummern in der Signalisierung fehlen verwendet der Dispatcher zur Bestimmung des Kunden Routing-Rufnummern.

Der Dispatcher wird realisiert durch eine Dispatcher-Software zur Identifizierung eines Kunden in einem Verbund aus Telekommunikationsanlagen anhand einer dem Kunden zugeordneten Kundenidentifikationsnummer KID, wobei die Identifizierung des Kunden mit Hilfe von in einer Anlage gespeicherten Dispatcher-Nummern erfolgt. Diese Dispatcher-Nummern enthalten diejenigen Teile von E.164-Rufnummern von an einer weiteren Anlage angeschlossenen Teilnehmern, die zur Bestimmung von AID und KID erforderlich sind. Die Ermittlung der AID und der KID erfolgt jeweils anhand einer mit dem Anruf übermittelten Rufnummer.

Häufig ergibt sich die AID und die KID schon aus der Ortsnetz-Vorwahlnummer und der Zugangsnummer eines Kunden zu diesem Ortsnetz an einem bestimmten Standort dieses Kunden. Beispielsweise ist dann die AID eindeutig, weil alle Teilnehmer dieses Kunden am einzigen Standort in diesem Ortsnetz an einer einzigen Anlage angeschlossen sind. Beispielsweise ist dann die KID eindeutig, weil andere Kunden andere Ortsnetz-Zugangsnummern in diesem Ortsnetz haben.

An diesem Beispiel erkennt man, dass die Verwendung von Dispatcher-Nummern normalerweise eine starke Datenreduktion bedeutet, weil üblicherweise die Nebenstellennummern innerhalb anderer Verbund-Anlagen nicht berücksichtigt werden müssen.

Erfindungsgemäß wird weiterhin eine Erweiterung der Telekommunikationsanlagen des Verbundes um eine Kunde zu Kunde Routing Tabelle in Matrix-Struktur vorgeschlagen, die angibt, ob Verbindungen zwischen den Endgeräten zweier verschiedener Kunden verbundintern oder über das öffentliche Netz abgewickelt werden.

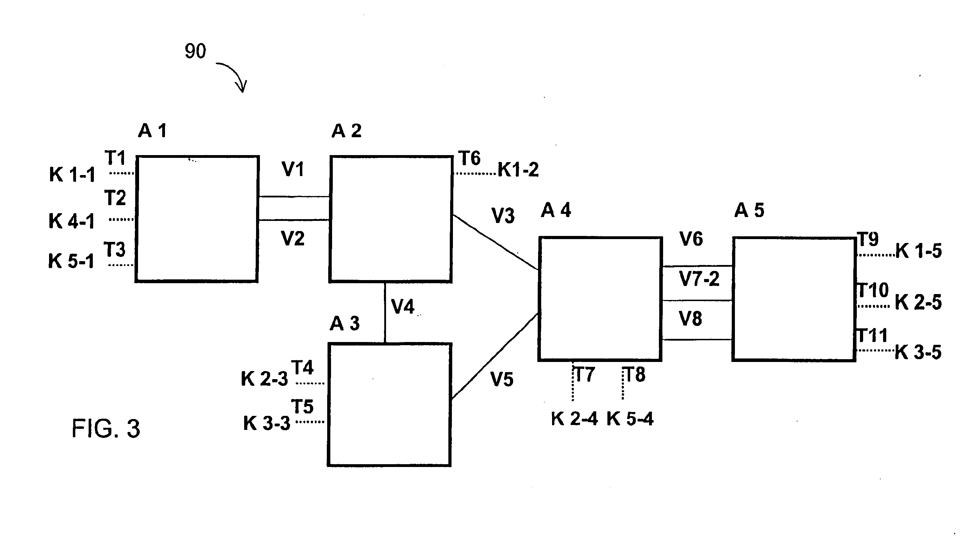

FIG. 3 zeigt einen Verbund 90 aus mandantenfähigen privaten Telekommunikationsanlagen A1, A2, A3, A4, A5 gemäß der Erfindung. Zunächst folgt eine Übersicht über die Symbole in FIG: 3.
- Ay: reale Telekommunikationsanlage y
- Kx-y: 1 .. n Teilnehmer des Kunden x an Telekommunikationsanlage y
- Vz: Verbundleitung z
- Vz-x: Verbundleitung z für exklusiven Gebrauch durch den Kunden x
- Tw: Teilnehmeranschlußleitung(en) w

Die Figur vereint beispielhaft mehrere verschiedene Konfigurationen mit ihren Komponenten. Die Telekommunikationsanlagen A2, A3 und A4 sind jeweils mit genau einer Verbundleitung untereinander verbunden, nämlich mit der Verbundleitung V3 zwischen A4 und A2; V4 zwischen A2 und A3; V5 zwischen A3 und A4.

Die Telekommunikationsanlagen A1 und A2 sowie A4 und A5 sind jeweils mit mehreren Verbundleitungen untereinander verbunden, nämlich mit den Verbundleitungen V1, V2 zwischen A1 und A2; und den Verbundleitungen V6, V7, V8 zwischen A4 und A5).

Die Telekommunikationsanlagen A2, A3, A4 bilden einen Verbund als Ringstruktur.

An der Anlage A2 ist nur ein Kunde, nämlich K1, angeschlossen, wobei dieser Kunde auch in anderen Telekommunikationsanlagen A1, A5 vertreten ist.

Ein Kunde, nämlich K4, hat die Eigenschaft, dass dessen Endgeräte nur in einer Telekommunikationsanlage, nämlich A1, angeschlossen sind, wobei in A1 noch Endgeräte anderer Kunden, nämlich K1, K5, deren Endgeräte im Verbund verteilt sind, angeschlossen sind, in diesem Beispiel für K1 in A1, A2 und A5 bzw. für K5 in A1 und A4.

Einige Kunden, nämlich K1, K2, K3, K5, haben die Eigenschaft, dass deren Endgeräte an mehreren Telekommunikationsanlagen des Verbundes angeschlossen sind.

Es bestehen Verbundleitungen, nämlich V1, V2, V3, V4, V5, V6, V8, für die gemeinsame Nutzung durch mehrere Kunden.

Es besteht eine Verbundleitung, nämlich V7-2, für die exklusive Nutzung durch einen Kunden, nämlich K2.

Es werden Transitknoten, z.B. A4, für Verbindungen von Endgeräten K1-5 und K1-2 der Kunden gezeigt, in denen keine Endgeräte dieses Kunden K1 angeschlossen sind.

Es wird ein Transitknoten, z.B. A4, für Verbindungen zwischen K2-5 und K2-3 gezeigt, wobei an A4 ebenfalls Endgeräte des Kunden K2 angeschlossen sind.

Aus Gründen der Übersichtlichkeit wurde auf die Darstellung von Amtsleitungen, die an einer oder mehreren Anlagen des Verbundes angeschaltet sein können, verzichtet.

Der mandantenfähige Telekommunikationsanlagenverbund 90 weist ein System von im Verbund mandantenfähigen Telekommunikationsanlagen, Verbundleitungen zwischen diesen Telekommunikationsanlagen, Amtsleitungen an einer oder mehreren dieser Telekommunikationsanlagen und Endgeräte, die an den Telekommunikationsanlagen angeschlossen sind, auf.

Die Telekommunikationsanlagen A1, A2, A3, A4, A5 weisen Dispatcher zur Ermittlung der Anlagenzugehörigkeit, nämlich der AID, von Endgeräten in jeder im Verbund mandantenfähigen Telekommunikationsanlage auf.

Die Telekommunikationsanlagen A1, A2, A3, A4, A5 weisen weiterhin jeweils ein Datenbanksystem für die Ablage von Daten, die zur Anlagenermittlung erforderlich sind, auf. Das Datenbanksystem liefert dem Dispatcher Daten für die Ermittlung der die Anlagen kennzeichnenden AID, in der gerufenes und rufendes Endgerät angeschlossen sind, bei der Vermittlung einer Verbindung.

Die Telekommunikationsanlagen A1, A2, A3, A4, A5 weisen außerdem jeweils eine Kunde zu Kunde Routing Tabelle zur Steuerung des kunden-übergreifenden Verkehrs auf.

Es wird erfindungsgemäß vorgeschlagen, bei Verbindungen im Telekommunikationsanlagenverbund die Kundenzugehörigkeit von Anrufer und Angerufenem aus deren im Verbund übermittelten Rufnummern zu ermitteln. Somit kann auch im Telekommunikationsanlagenverbund zwischen kunden-m und kunden-übergreifendem Verkehr unterschieden werden. Diese Unterscheiduinterneng ist ebenfalls möglich für die Transit-Anlagen von Verbindungen zwischen Endgeräten von Kunden, die in dieser Transit-Anlage keine Endgeräte angeschaltet haben. Da jede erfindungsgemäße Telekommunikationsanlage im Verbund Verbindungen einem Kunden zuordnen kann, werden kundenspezifische Tarifierungen an den Verbundleitungen möglich. Vorteilhafterweise werden somit Gebühreninformationen bereits in der Telekommunikationsanlage kundenbezogen abgelegt, so dass auf mandantenfähige externe Gebührenverarbeitungsprogramme verzichtet werden kann. Verbundleitungen des Systems werden üblicherweise von den jeweiligen Kunden gemeinschaftlich genutzt, können aber auch derart eingerichtet werden, dass sie exklusiv durch einen Kunden genutzt werden, etwa um für diesen Kunden die Dienstleistung einer bestimmten Kapazitätsgarantie zu erbringen. Die kundenspezifische Konfigurierung erfolgt mit der Kundenidentifikationsnummer KID und mit der Ablage der für den Dispatcher zur KID-Ermittlung notwendigen Daten in jeder Telekommunikationsanlage. Die KID muß zumindest in der jeweiligen Telekommunikationsanlage eindeutig sein. Für das beschriebene Verfahren ist verbundweite Eindeutigkeit der KID nicht zwingend erforderlich, ist aber für administrative Belange vorteilhaft. Eine Erweiterung der Signalisierungsprotokolle um eine KID ist somit nicht erforderlich, da die KID aus der E.164-Rufnummer ermittelt werden kann. Damit können auch Telekommunikationsanlagen, die das Verfahren nicht unterstützen, störungsfrei in den Verbund integriert werden, wobei die hier beschriebenen Funktionalitäten nur in den erfindungsgemäßen Telekommunikationanlagen erbracht werden. Somit ist es möglich, dass Anlagen, die das Verfahren nicht unterstützen, und nur Endgeräte eines einzigen Kunden angeschlossen haben, in den Verbund bei voller Funktionalität des Verbundes integriert werden können.

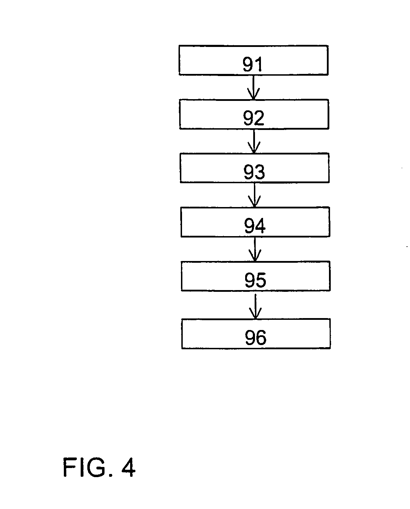

Mit Hilfe der FIG. 4 - 7 folgt eine Beschreibung der erfindungsgemäßen Verfahrensschritte bei der Bearbeitung von Verbindungen im Multi-Corporate-Network.

Zum Sprachgebrauch, es bedeutet:
- Gehende Belegung einer Verbundleitung: Eine Verbindung verlässt eine Telekommunikationsanlage des Verbundes über eine Verbundleitung.
- Kommende Belegung einer Verbundleitung: Eine Verbindung betritt eine Telekommunikationsanlage des Verbundes über eine Verbundleitung.
- Gehende Belegung einer Amtsleitung: Eine Verbindung verlässt eine Telekommunikationsanlage des Verbundes über eine Amtsleitung hin zum öffentlichen Netz.
- Kommende Belegung einer Amtsleitung: Eine Verbindung betritt eine Telekommunikationsanlage des Verbundes über eine Amtsleitung.
- Verbindung mit externer Quelle: Ein Endgerät des Anrufers ist im öffentlichen Netz angeschlossen. Die Verbindung erreicht den Verbund über die Amtsleitung einer der Telekommunikationsanlagen des Verbundes.
- Verbindung mit interner Quelle: Ein Endgerät des Anrufers ist unmittelbar an eine Telekommunikationsanlage des Verbundes angeschlossen.
- Verbindung mit externem Ziel: Ein Endgerät des Angerufenen ist im öffentlichen Netz angeschlossen. Die Verbindung verlässt den Verbund über die Amtsleitung einer der Telekommunikationsanlagen des Verbundes.
- Verbindung mit internem Ziel: Ein Endgerät des Angerufenen ist unmittelbar an eine Telekommunikationsanlage des Verbundes angeschlossen.
- Rufnummernplan RNP: Ein RNP erlaubt die Umsetzung von der Rufnummer eines Endgerätes in die Hardwareadresse seiner Anschlussleitung. Innerhalb einer Telekommunikationsanlage des Verbundes ist für jeden Kunden, der an diese Telekommunikationsanlage Endgeräte angeschlossen hat, ein kunden-individueller RNP vorhanden.
- Transit-Telekommunikationsanlage: Diese Bezeichnung wird verbindungsbezogen vergeben und bedeutet, dass in dieser Telekommunikationsanlage weder Ursprung noch Ziel der Verbindung liegen. Diese Telekommunikationsanlage stellt für eine Verbindung den Übergang von einer Verbundleitung zur nächsten Verbundleitung auf dem Weg vom Ursprung der Verbindung zu ihrem Ziel her. Transit-Telekommunikationsanlage wird synonym mit Durchgangsanlage verwendet.

FIG. 4 zeigt ein Ablaufdiagramm eines Verfahrens zur Konfiguration eines Verbundes aus privaten Nebenstellenanlagen, die durch Verbindungsleitungen miteinander verbunden sind gemäß der Erfindung, wobei mehrere Kunden mit jeweils einer Vielzahl von Endgeräten den Verbund unabhängig voneinander nutzten. In einem erfindungsgemäßen Verbund ist mindestens eine Telefonanlage, in der das erfindungsgemäße Verfahren ablaufen kann, vorhanden. Der erfindungsgemäße Verbund weist weitere Anlagen auf, in denen das erfindungsgemäße Verfahren zwar ebenfalls ablaufen kann, jedoch nicht ablaufen können muß.

In einer Anlage des Verbundes wird in Verfahrensschritt 91 jeder Anlage im Verbund eine Anlagenidentifikationsnummer AID zur Identifikation im Verbund zugeordnet. In derselben Anlage wird in Verfahrensschritt 92 zu jedem Kunden eine Kundenidentifikationsnummer KID zugeordnet. In einer Anlage, an der Endgeräte angeschlossen sind, ist ein kundenindividueller Rufnummernplan für jeden Kunden, der Endgeräte in dieser Telekommunikationsanlage angeschlossen hat, eingerichtet. In Verfahrensschritt 93 werden die auswertungsrelevanten Teile von E.164-Rufnummern zur Bildung von AID und KID von an einer weiteren Anlage angeschlossenen Teilnehmernals Dispatcher-Nummern gespeichert. Es sind aber auch Anlagen möglich, an die keine Endgeräte angeschlossen sind, die lediglich andere Anlagen miteinander verbinden. Eine erfindungsgemäße Telefonanlage kann auch derart lediglich zur Verbindung anderer Anlagen eingesetzt werden, das ist aber ein Ausnahmefall. In Verfahrensschritt 94 wird in derselben Anlage eine Zuordnung der Anlagenidentifikationsnummern AID aller Telekommunikationsanlagen des Verbundes und der Kundenidentifikationsnummern KID aller Kunden des Verbundes zu den jeweiligen Dispatcher-Nummern vorgenommen.

Die Verfahrensschritte 91 - 94 bereiten die Anlage für die Vemetzung im Verbund vor. Vorzugsweise werden alle angeschlossenen Endgeräte erfasst. Der Begriff Verbund im Sinne der Erfindung umfaßt alle Anlagen, deren AID beim Ablauf des erfindungsgemäßen Verfahrens in einer bestimmten Anlage des Verbundes ermittelt werden kann. Es ist auch möglich, dass mehrere Anlagen einen Subverbund bilden, der über eine Verbindungsanlage an den Verbund angeschlossen ist, wobei die Verbindungsanlage im Verbund den gesamten Subverbund repräsentiert. Das bedeutet, dass innerhalb des Verbundes alle Endgeräte des Subverbundes der Verbindungsanlage zugeordnet sind. Die gesamte Kommunikation zwischen Verbund und Subverbund läuft dann über die Verbindungsanlage, welche die Verbundaufgaben für den Subverbund übernimmt.

Das Anbinden eines Subverbundes über eine einzige Anlage ist möglich, weil die Anlagen, in denen das erfindungsgemäße Verfahren abläuft, unabhängig voneinander arbeiten in dem Sinne, dass eine solche Anlage einen ankommenden Anruf nach ihren eigenen Daten, nämlich eigenen gespeicherten AID, KID und Dispatcher-Nummern, bearbeitet.

Die AID und die KID können in in jeder Verbundanlage spezifisch vergeben werden. Vorteilhaft für die Verbundverwaltung ist allerdings eine verbundweit einheitliche Vergabe sowohl der AID als auch der KID.

In einer bevorzugten Ausgestaltung der Erfindung wird in Verfahrensschritt 95 eine Kunde zu Kunde Routing Tabelle erstellt, die zu jeder Kundenidentifikationsnummer KID diejenigen Kundenidentifikationsnummern KID aufweist, bei denen ein verbundinterner Verkehr erlaubt ist. Dies erfolgt vorteilhafterweise in jeder Anlage des Verbundes. Somit kann jede Anlage den kundenübergreifenden Verkehr regelgemäß vermitteln. Vorzugsweise ist die Kundenidentifikationsnummer KID im Verbund einheitlich.

In einer anderen bevorzugten Ausgestaltung der Erfindung erfolgt in Verfahrensschritt 96 in jeder Anlage des Verbundes eine Zuordnung derjenigen Anlagen des Verbundes über die Anlagenidentifikationsnummer AID zu einer Verbindungsleitung, die über diese Verbindungsleitung erreichbar sind.

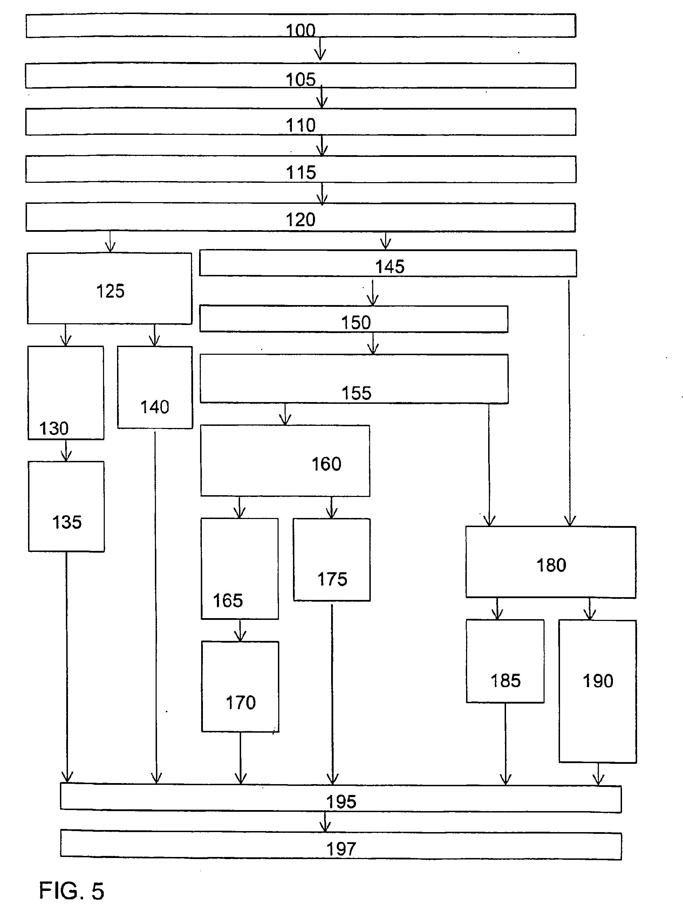

In den FIG. 5 - 7 werden die Verfahrensschritte in den Telekommunikationsanlagen separat für die Telekommunikationsanlage mit dem Ursprung der Verbindung und die Telekommunikationsanlage mit dem Ziel der Verbindung dargestellt. Ursprung und Ziel einer Verbindung können direkt an die Telekommunikationsanlagen des Verbundes angeschaltete Endgeräte oder Amtsleitungen sein.

FIG. 5 zeigt ein Ablaufdiagramm eines Verfahrens zum Betrieb eines Verbundes aus privaten Nebenstellenanlagen gemäß der Erfindung bei Erhalten eines Anrufes aus interner Quelle.

In Verfahrensschritt 100 wird ein Anruf aus interner Quelle erhalten. In Schritt 105 wird aus den Konfigurationsdaten des Endgeräteanschlusses die KID ermittelt. Die AID der eigenen Anlage ist für alle angeschlossenen Endgeräte gleich und wird einmal in den zentralen Datenstruckturen der Anlage gespeichert. Dies erfolgt üblicherweise über die Hardware Adresse des Endgeräteanschlusses als Ausgangsdatum. Die KID kann alternativ über die Dispatcher-Nummer des Endgerätes ermittelt werden. In Schritt 110 erfolgt die Zuordnung des Anrufes zur in Schritt 105 ermittelten KID.

Nun erfolgt in Schritt 115 die Analyse der Zielrufnummer mit den Dispatcher-Nummern. Falls das Ziel innerhalb des Verbundes ist, also ein Teil der Zielrufnummer mit einer Dispatcher-Nummer übereinstimmt, lassen sich die KID und die AID des Ziels aus gespeicherten Daten ermitteln, da sie der Dispatcher-Nummer zugeordnet sind.

In Schritt 120 wird abgefragt, ob eine kundeninterne Verbindung vorliegt, also ob die KID des Anrufers mit der KID des Ziels identisch ist. Falls ja, so erfolgt eine Verzweigung zu Schritt 125, in dem geprüft wird, ob die Telekommunikationsanlage des Anrufers und des Ziels identisch sind, also ob anrufendes und angerufenes Endgerät an derselben Anlage angeschlossen sind. Falls ja, so wird in Schritt 130 verzweigt, indem der Rufnummernplan für diesen Kunden geladen wird. Aus dem Rufnummernplan wird in Schritt 135 die Hardwareadresse des Zielgerätes ermittelt. Mit der Hardwareadresse wird in Schritt 195 die Verbindung hergestellt. Die Verbindung wird in Schritt 197 beendet.

Falls die Telekommunikationsanlage des Anrufers und des Ziels nicht identisch ist, wird von Schritt 125 in Schritt 140 verzweigt, in dem die Verbundleitung zur ersten Anlage auf dem Weg zum Ziel ermittelt wird. Anschließend wird mit dieser Verbundleitung die Verbindung hergestellt in Schritt 195 und wiederum in Schritt 197 beendet.

Falls keine kundeninterne Verbindung vorliegt, also die KID des Anrufers nicht identisch ist mit der KID des Ziels, so verzweigt Schritt 120 in Schritt 145, in dem überprüft wird, ob das Ziel bei einem anderen Kunden des Verbundes ist, also ob die KID des Ziels im Verbund bekannt ist. Falls ja, so wird in Schritt 150 verzweigt und die Kunde zu Kunde Routing Tabelle geladen. Mit der Kunde zu Kunde Routing Tabelle wird in Schritt 155 überprüft, ob ein verbundinterner Verkehr zwischen Endgeräten dieser Kunden erlaubt ist. Falls ja, so wird in Schritt 160 verzweigt, in dem geprüft wird, ob das Endgerät des Zielkunden an dieser Anlage angeschlossen ist. Falls dies der Fall ist, so wird in Schritt 165 verzweigt und der Rufnummernplan des Zielkunden geladen. Anschließend wird die Hardware Adresse des Zielendgeräts in Schritt 170 ermittelt. Danach wird wieder in Schritt 195 die Verbindung hergestellt und in Schritt 197 beendet. Falls das Endgerät des Zielkunden nicht an derselben Telekommunikationsanlage angeschlossen ist, so wird von Schritt 160 auf Schritt 175 verzweigt, in dem die Verbundleitung zu der Zielanlage ermittelt wird. Anschließend wird wiederum die Verbindung hergestellt und beendet in den Schritten 195 und 197.

Falls der verbundinterne Verkehr zwischen Endgeräten dieser Kunden nicht erlaubt ist, so verzweigt Schritt 155 in Schritt 180, in dem geprüft wird, ob eine Amtsleitung in der eigenen Telekommunikationsanlage vorliegt. Falls dies so ist, so wird die Amtsleitung ermittelt in Schritt 185 und wiederum die Verbindung hergestellt und beendet in den Schritten 195 und 197.

Falls in der eigenen Telekommunikationsanlage keine Amtsleitung vorhanden ist, wird von Schritt 180 in Schritt 190 verzweigt, und die Verbundleitung zur Telekommunikationsanlage mit Amtsleitungen wird ermittelt. Damit wird dann wiederum die Verbindung hergestellt und beendet in den Schritten 195 und 197.

Falls das Ziel nicht im Verbund bekannt ist, so wird aus Schritt 145 direkt in Schritt 180 verzweigt, in dem wie oben beschrieben, weiter verfahren wird.

FIG. 5 zeigt somit die Abläufe in der Telekommunikationsanlage des Endgerätes, das einen Verbindungsaufbau initiiert, wenn Gespräche zwischen Endgeräten derselben Kunden verbundintern und Verbindungen, die die virtuelle Telekommunikationsanlage des Kunden verlassen, konfigurationsabhängig mittels der Kunde zu Kunde Routing Tabelle über das öffentliche Netz, Verfahrensschritte 145, 150, 155, 180, oder verbundintern, Verfahrensschritte 145, 150, 155, 160, 165, 170, 175, abgewickelt werden. Hierbei wird unter den Verfahrensschritten 180, 185 und 190 berücksichtigt, dass im erfindungsgemäßen Telekommunikationsanlagenverbund nicht alle Telekommunikationsanlagen mit Amtzugängen ausgestattet sind. So wird unter 190 eine Verbundleitung belegt, die direkt oder über weitere Telekommunikationsanlagen des Verbundes zu einer Telekommunikationsanlage mit Amtzugang führt. Bei der Ermittlung der Verbundleitung, Verfahrensschritte 140, 175, 190, werden vorzugsweise Verbundleitungen für den exklusiven Gebrauch durch diesen Kunden zugeteilt. Steht eine Verbundleitung für den exklusiven Gebrauch nicht zur Verfügung, so wird nach einer Verbundleitung für die gemeinsame Nutzung gesucht.

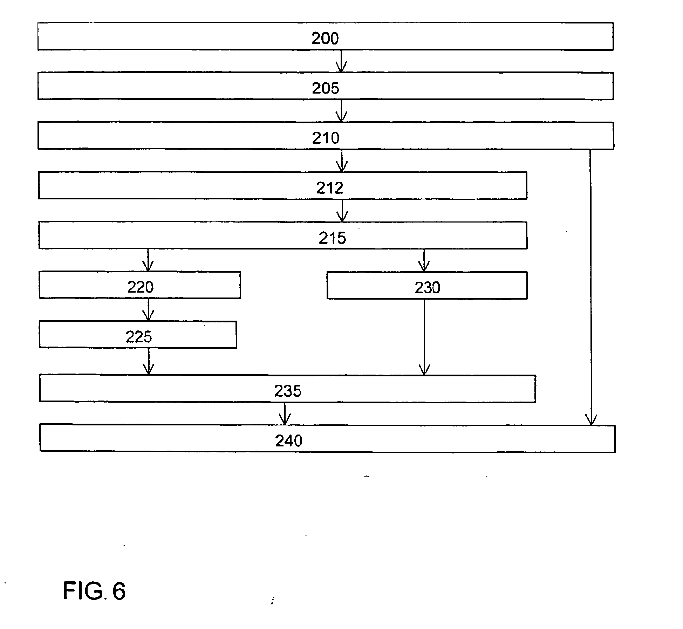

FIG. 6 zeigt ein Ablaufdiagramm eines Verfahrens zum Betrieb eines Verbundes aus privaten Nebenstellenanlagen gemäß der Erfindung bei Erhalten eines Anrufes aus externer Quelle.

In Verfahrensschritt 200 wird ein Anruf aus externer Quelle erhalten. In Schritt 205 erfolgt die Analyse der Zielrufnummer. Für ein Ziel innerhalb des Verbundes lassen sich über die gespeicherten Dispatcher-Nummern die KID und die AID des Ziels ermitteln. Sofern ein Teil der Zielrufnummer mit einer Dispatcher-Nummer übereinstimmt, lassen sich die KID und die AID des Ziels aus gespeicherten Daten ermitteln, da sie der Dispatcher-Nummer zugeordnet sind.

In Schritt 210 wird abgefragt, ob die KID und die AID zu dem gerufenen Endgerät im Verbund bekannt sind. Falls ja, so erfolgt eine Verzweigung zu Schritt 212, in dem die Zuordnung des Anrufes zur KID des Ziels erfolgt.

Nun wird in Schritt 215 geprüft, ob das Endgerät des Zielkunden an dieser Anlage angeschlossen ist. Falls dies der Fall ist, so wird in Schritt 220 verzweigt und der Rufnummernplan des Zielkunden geladen. Anschließend wird die Hardware Adresse des Zielendgeräts in Schritt 225 ermittelt. Danach wird in Schritt 235 die Verbindung hergestellt und in Schritt 240 beendet. Falls das Endgerät des Zielkunden nicht an derselben Telekommunikationsanlage angeschlossen ist, so wird von Schritt 215 auf Schritt 230 verzweigt, in dem die Verbundleitung zu der Zielanlage ermittelt wird. Anschließend wird wiederum die Verbindung hergestellt und beendet in den Schritten 235 und 240.

Falls in Schritt 210 die KID und die AID zu dem gerufenen Endgerät im Verbund nicht bekannt sind, so erfolgt eine Verzweigung zu Schritt 240, in dem der Anruf beendet wird.

FIG. 6 zeigt somit die Abläufe in der Telekommunikationsanlage jener Amtsleitung, über die eine Verbindung mit externer Quelle den Verbund betritt. Hierbei wird unter den Verfahrensschritten 215 und 230 berücksichtigt, dass im erfindungsgemäßen Telekommunikationsanlagenverbund nicht alle Telekommunikationsanlagen mit Amtzugängen ausgestattet sind. So wird unter 230 eine Verbundleitung belegt, die direkt oder über weitere Telekommunikationsanlagen des Verbundes zu jener Telekommunikationsanlage mit dem Zielendgerät führt. Bei der Ermittlung der Verbundleitung im Verfahrensschritt 230 werden vorzugsweise Verbundleitungen für den exklusiven Gebrauch durch den ermittelten Kunden zugeteilt. Steht eine Verbundleitung für den exklusiven Gebrauch nicht zur Verfügung, so wird nach einer Verbundleitung für die gemeinsame Nutzung gesucht.

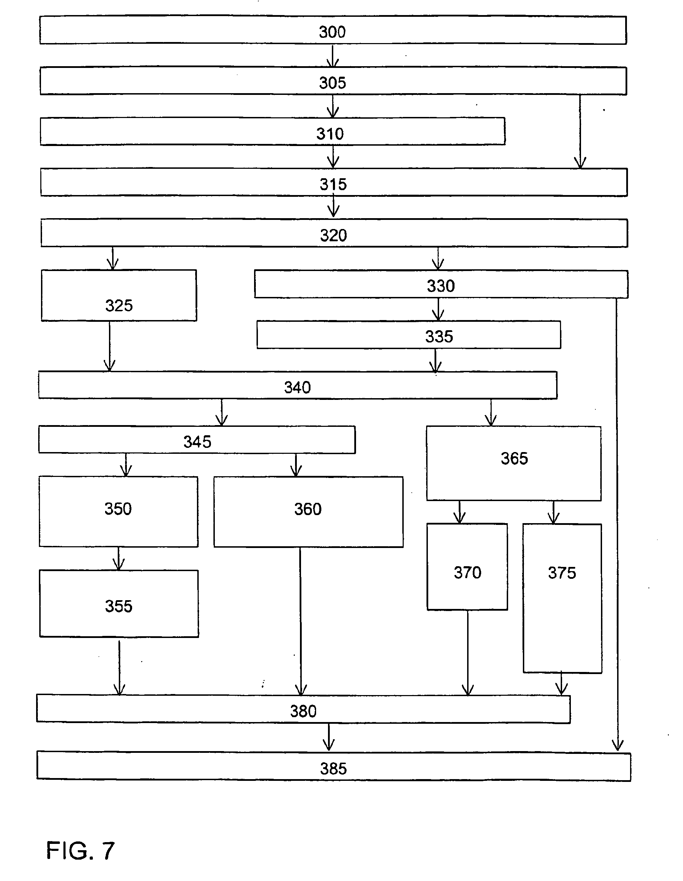

FIG. 7 zeigt ein Ablaufdiagramm eines Verfahrens zum Betrieb eines Verbundes aus privaten Nebenstellenanlagen gemäß der Erfindung bei Erhalten eines Anrufes von einer kommend belegten Verbundleitung.

In Verfahrensschritt 300 wird ein Anruf auf einer kommend belegten Verbundleitung erhalten. In Schritt 305 wird geprüft, ob die Rufnummer des Verbindungsursprungs in der Signalisierung enthalten ist. Falls ja, so wird in Schritt 310 die Rufnummer des Verbindungsursprungs analysiert und über die Dispatcher-Nummern die KID des Verbindungsursprungs ermittelt; sofern der Verbindungsursprung im Verbund liegt. Nun erfolgt in Schritt 315 die Analyse der Zielrufnummer über die Dispatcher-Nummern. Falls das Ziel innerhalb des Verbundes ist, also ein Teil der Zielrufnummer mit einer Dispatcher-Nummer übereinstimmt, lassen sich die KID und die AID des Ziels aus gespeicherten Daten ermitteln, da sie der Dispatcher-Nummer zugeordnet sind.

Falls in Schritt 305 die Rufnummer des Verbindungsursprungs nicht in der Signalisierung enthalten ist, erfolgt eine Verzweigung direkt in Schritt 315 zur Analyse der Zielrufnummer.

In Schritt 320 wird abgefragt, ob der Ursprung der Verbindung dem Anlagenverbund bekannt ist. Falls ja, so erfolgt eine Verzweigung zu Schritt 325, in dem der Anruf der KID des Verbindungsursprungs zugeordnet wird. Danach geht es in Schritt 340 weiter.

Falls In Schritt 320 der Ursprung der Verbindung dem Anlagenverbund nicht bekannt ist, so erfolgt eine Verzweigung zu Schritt 330, in dem nun überprüft wird, ob das Ziel der Verbindung dem Anlagenverbund bekannt ist. Falls ja, so erfolgt eine Verzweigung zu Schritt 335, wo der Anruf der KID des Verbindungsziels zugeordnet wird. Danach geht es in Schritt 340 weiter, in dem abgefragt wird, ob ein Anruf zu einem Endgerät im Verbund vorliegt, also KID des Ziels und AID des Ziels bekannt sind. Falls ja, so wird in Schritt 345 verzweigt, in dem geprüft wird, ob das Endgerät des Zielkunden an dieser Anlage angeschlossen ist. Falls dies der Fall ist, so wird in Schritt 350 verzweigt und der Rufnummernplan des Zielkunden geladen. Anschließend wird die Hardware Adresse des Zielendgeräts in Schritt 355 ermittelt. Danach wird wieder in Schritt 380 die Verbindung hergestellt und in Schritt 385 beendet.

Falls das Endgerät des Zielkunden nicht an derselben Telekommunikationsanlage angeschlossen ist, so wird von Schritt 345 auf Schritt 360 verzweigt, in dem die Verbundleitung zu der Zielanlage ermittelt wird. Anschließend wird wiederum die Verbindung hergestellt und beendet in den Schritten 380 und 385.

Falls der in Schritt 340 kein Anruf zu einem Endgerät im Verbund vorliegt, so verzweigt Schritt 340 in Schritt 365, in dem geprüft wird, ob eine Amtsleitung in der eigenen Telekommunikationsanlage vorliegt. Falls dies so ist, so wird die Amtsleitung ermittelt in Schritt 370 und wiederum die Verbindung hergestellt und beendet in den Schritten 380 und 385.

Falls Schritt 365 keine Amtsleitung in der eigenen Telekommunikationsanlage vorhanden ist, wird von Schritt 365 in Schritt 375 verzweigt, und die Verbundleitung zur Telekommunikationsanlage mit Amtsleitungen wird ermittelt. Damit wird dann wiederum die Verbindung hergestellt und beendet in den Schritten 380 und 385.

Falls das Ziel nicht im Verbund bekannt ist, so wird aus Schritt 330 direkt in Schritt 385 verzweigt, in dem die Verbindung beendet wird.

FIG. 7 zeigt somit die Abläufe in der Telekommunikationsanlage für eine Verbindung mit kommend belegter Verbundleitung. Diese Telekommunikationsanlage kann:
- Endanlage der Verbindung sein; d.h. das Endgerät des Zielteilnehmers ist an diese Telekommunikationsanlage angeschaltet;
- der Übergang für diese Verbindung in das öffentliche Netz sein;
- eine Durchgangsanlage für diese Verbindung sein, d.h. in dieser Telekommunikationsanlage wird eine weitere Verbundleitung für diese Verbindung gehend belegt;
die Notwendigkeit des Abbruchs dieser Verbindung erkennen, wenn sowohl Ursprung als auch Ziel dieser Verbindung außerhalb des Verbundes liegen.

Wie auch zuvor wird unter Verfahrensschritt 365 berücksichtigt, dass im erfindungsgemäßen Telekommunikationsanlagenverbund nicht alle Telekommunikationsanlagen mit Amtzugängen ausgestattet sind. So wird unter 375 eine Verbundleitung gehend belegt, die direkt oder über weitere Telekommunikationsanlagen des Verbundes zu einer Telekommunikationsanlage mit Amtsleitung führt. Bei der Ermittlung einer Verbundleitung unter Verfahrensschritten 360, 375 werden vorzugsweise Verbundleitungen für den exklusiven Gebrauch durch die ermittelten Kunden zugeteilt. Steht eine Verbundleitung für den exklusiven Gebrauch nicht zur Verfügung, so wird nach einer Verbundleitung für die gemeinsame Nutzung gesucht.

Einer Verbindung von der kommend belegten Verbundleitung wird vorzugsweise der KID des Verbindungsursprungs zugeordnet, Schritte 305, 310, 315, 320, 325, u.a. im Hinblick auf die Tarifierung. Ist dies nicht möglich, wird die Verbindung der KID des Verbindungsziels zugeordnet, Schritte 320, 330, 335. Verbindungen, die keiner KID zugeordnet werden können, werden ausgelöst, Schritte 330, 385.

Erfindungsgemäß benutzt das Verfahren zum Betrieb einer Telekommunikationsanlage eine Dispatcher-Software. Die erfindungsgemäße Dispatcher-Software für eine Telekommunikationsanlage dient zur Identifizierung eines Kunden und einer Anlage in einem Verbund aus Telekommunikationsanlagen anhand einer dem_Kunden zugeordneten Kundenidentifikationsnummer KID und einer der Anlage zugeordneten AID. Dabei erfolgt die Identifizierung von Kunde und Anlage mit Hilfe von in einer Anlage gespeicherten Dispatcher-Nummern, nämlich denjenigen Teilen von E.164-Rufnummern von an einer weiteren Anlage angeschlossenen Teilnehmern, die zur Bestimmung von AID und KID erforderlich sind, anhand mit dem Anruf übermittelter Rufnummern.

Die Ausführung der Erfindung ist nicht auf das beschriebene Beispiel und die oben hervorgehobenen Aspekte beschränkt, sondern im Rahmen der Ansprüche ebenso in einer Vielzahl von Abwandlungen möglich, die im Rahmen fachgemäßen Handelns liegen.

### Bezugszeichenliste

Kommunikationssystem 10
Kommunikationsanlage 12
Leitung 14
Endgeräte / Teilnehmer 16, 18, 20, 21
Kunden 22, 24, 26, 27
Leitungen 28, 29, 30, 31
Einrichtung 32 zur Bereitstellung RNP
Datenbereiche / virtuelle private Telefonanlage 34, 36, 38, 39
Einrichtung 40 zum Einrichten einer Zugangsrufnummer
Rufnummer 42, 44, 46, 47 im jeweiligen Ortsnetz
Rufnummer E.164 48, 50, 52, 53
Rufnummern 54, 56, 58, 59 für das Ortsnetz
Teilnehmernummern 60, 62, 64
Einrichtung 66 zur Analyse und Zuordnung
Vermittlungssoftware 70
Dispatcher-Software 72
Datenbank 74
Kundenbereiche 75, 76, 77, 78
entsprechenden Rufnummerplan 79
LCR 80
kundenspezifische Daten 82
Ziel-Rufnummer 83
Kundenidentifikationsnummer 84
Hardwareadresse 86
Verbund 90
Telekommunikationsanlagen A1, A2, A3, A4, A5
   - Ay: reale Telekommunikationsanlage y
   - Kx-y: 1 .. n Teilnehmer des Kunden x an Telekommunikationsanlage y
   - Vz: Verbundleitung z
   - Vz-x: Verbundleitung z für exklusiven Gebrauch durch den Kunden x
   - Tw: Teilnehmeranschlussleitung(en) w

- 91: AID der Anlage zugeordnet
- 92: KID jedem Kunden zugeordnet
- 93: Speichern von Dispatcher-Nummern
- 94: Zuordnung der AID und KID zu der Dispatcher-Nummer
- 95: Kunde zu Kunde Routing Tabelle ob verbundinterner Verkehr erlaubt wird erstellt
- 96: Zuordnung AID zu einer Verbindungsleitung
- 100: Anruf aus interner Quelle wird erhalten
- 105: KID wird ermittelt
- 110: Zuordnung des Anrufes zur KID
- 115: Analyse der Zielrufnummer
- 120: kundeninterne Verbindung?
- 125: Telekommunikationsanlage des Anrufers und des Ziels identisch?
- 130: Rufnummernplan laden
- 135: Hardwareadresse des Zielgerätes ermitteln
- 140: Verbundleitung wird ermittelt
- 145: Ziel bei einem anderen Kunden des Verbundes?
- 150: Kunde zu Kunde Routing Tabelle laden
- 155: verbundinterner Verkehr erlaubt?
- 160: Endgerät des Zielkunden an dieser Anlage?
- 165: Rufnummernplan des Zielkunden laden
- 170: Hardware Adresse des Zielendgeräts ermitteln
- 175: Verbundleitung zu der Zielanlage wird ermittelt
- 180: Amtsleitung in der eigenen Telekommunikationsanlage?
- 185: Amtsleitung ermitteln
- 190: Verbundleitung ermitteln
- 195: die Verbindung herstellen
- 197: Verbindung beenden
- 200: Anruf wird aus externer Quelle erhalten
- 205: Analyse der Zielrufnummer
- 210: KID und die AID im Verbund bekannt?
- 212: Zuordnung des Anrufes zur KID des Ziels
- 215: Endgerät des Zielkunden an dieser Anlage angeschlossen?
- 220: Rufnummernplan laden
- 225: Hardware Adresse des ermitteln
- 230: Verbundleitung zu der Zielanlage ermitteln
- 235: Verbindung hergestellt
- 240: Verbindung beendet
- 300: Anruf auf einer kommend belegten Verbundleitung erhalten
- 305: Rufnummer des Verbindungsursprungs in der Signalisierung enthalten?
- 310: Rufnummer des Verbindungsursprungs analysieren
- 315: die Analyse der Zielrufnummer
- 320: Ursprung der Verbindung dem Anlagenverbund bekannt?
- 325: Anruf wird der KID des Verbindungsursprungs zugeordnet
- 330: Ziel der Verbindung dem Anlagenverbund bekannt?
- 335: Zuordnung des Anrufs zur Ziel-KID
- 340: Anruf zu einem Endgerät im Verbund?
- 345: Endgerät des Zielkunden an dieser Anlage angeschlossen?
- 350: Rufnummernplan des Zielkunden laden
- 355: Hardware Adresse des Zielendgeräts ermitteln
- 360: Verbundleitung zu der Zielanlage ermitteln
- 365: Amtsleitung in eigener Telekommunikationsanlage?
- 370: Amtsleitung ermitteln
- 375: Verbundleitung zur Telekommunikationsanlage mit Amtsleitungen ermitteln
- 380: Verbindung hergestellt
- 385: Verbindung beendet

## Patentansprüche

1. Private Telekommunikationsanlage (10, A1, A2, A3, A4, A5) in einem Verbund mit mindestens einer weiteren privaten Telekommunikationsanlage, **gekennzeichnet durch** einen Speicher zum Speichern von Daten über an die mindestens eine weitere Telekammunikationsanlage des Verbundes angeschlossenen Teilnehmer von Kunden, die den Verbund gemeinsam und unabhängig voneinander nutzen, nämlich eine Anlagenidentifikationsnummer AID der weiteren Anlage, an der der jeweilige Teilnehmer mit der jeweiligen Rufnummer angeschlossen ist, und eine Kundenidentifikationsnummer KID, die den Kunden des jeweiligen Teilnehmers identifiziert, sowie die Teile von Rufnummern von an jeder weiteren Anlage angeschlossenen Teilnehmern, die zur Ermittlung von AID und KID erforderlich sind, und einen Dispatcher zur Ermittlung einer KID und/oder einer AID aus den Teilen von Rufnummern.

2. Verbund (90) aus mindestens zwei privaten Telekommunikationsanlagen (A1, A2, A3, A4, A5), der mindestens eine private Telekommunikationsanlage nach Anspruch 1 oder 2 aufweist.

3. Verbund aus privaten Telekommunikationsanlagen nach Anspruch 2, wobei mindestens eine private Telekommunikationsanlage des Verbundes eine Kunde zu Kunde Routing Tabelle aufweist, die zu jeder Kundenidentifikationsnummer KID diejenigen Kundenidentifikationsnummern KID aufweist, für deren zugeordnete Teilnehmer der Kunden ein verbundinterner Verkehr zwischen den Teilnehmern der Kunden erlaubt ist.

4. Verfahren zur Konfiguration eines Verbundes (90) aus privaten
Telekommunikationsanlagen (A1, A2, A3, A4, A5), wobei mehrere Kunden mit jeweils einer Vielzahl von Endgeräten den Verbund unabhängig voneinander nutzen, mit den Verfahrensschritten in mindestens einer Anlage des Verbundes
- Zuordnen (91) einer Anlagenidentifikationsnummer AID zu jeder Anlage im Verbund;
- Zuordnen (92) einer Kundenidentifikationsnummer KID zu jedem Kunden im Verbund;
- Speichern (93) der Teile von E.164-Rufnummem von an der eigenen Anlage und weiteren Anlagen angeschlossenen Teilnehmern, die zur Bestimmung von AID und KID erforderlich sind, als Dispatcher-Nummern;
- Zuordnen (94) der AID und KID zu den Dispatcher-Nummern.

5. Verfahren nach Anspruch 4, mit dem weiteren Verfahrensschritt
- Erstellen (95) einer Kunde zu Kunde Routing Tabelle, die zu jeder Kundenidentifikationsnummer KID diejenigen Kundenidentifikationsnummern KID aufweist, bei denen ein verbundinterner Verkehr zwischen den Teilnehmern der Kunden erlaubt ist.

6. Verfahren nach einem der Ansprüche 4 oder 5, mit dem weiteren Verfahrensschritt in jeder Anlage des Verbundes
- Zuordnung (96) derjenigen Anlagen des Verbundes über die Anlagenidentifikationsnummer AID zu einer Verbindungsleitung, die über diese Verbindungsleitung erreichbar sind.

7. Verfahren nach einem der Ansprüche 4 bis 6, wobei für einen Kunden über dessen KID auf einer Verbindungsleitung zu einer anderen Anlage des Verbundes eine Übertragungskapazität reserviert wird.

8. Verfahren nach einem der Ansprüche 4 bis 7, wobei der Verbund derart konfiguriert ist, dass bei kundenübergreifendem nicht verbundinternem Verkehr alle Anlagen des Verbundes sowohl KID als auch AID von Anrufer und Angerufenem bestimmen können.

9. Verfahren nach einem der Ansprüche 4 bis 7, wobei mindestens eine der weiteren Anlagen eine herkömmliche private Nebenstellenanlage mit Teilnehmern eines einzigen Kunden ist.

10. Verfahren zum Betrieb eines Verbundes (90) aus privaten Telekommunikationsanlagen (A1, A2, A3, A4, A5), die durch Verbindungsleitungen miteinander verbunden sind, wobei mehrere Kunden mit zugeordneter Kundenidentifikationsnummer KID mit jeweils einer Vielzahl von Endgeräten den Verbund unabhängig voneinander nutzen, mit den Verfahrensschritten
- Erhalten (100, 200, 300) eines Anrufs;
- Ermittlung (105, 205, 310, 315) einer Kundenidentifikationsnummer KID aus einer mit dem Anruf übermittelten Rufnummer;
- Zuordnen (110, 212, 325, 335) des Anrufs zur ermittelten Kundenidentifikationsnummer KID;
- Ermittlung (115, 205, 315) einer Anlagen identifikationsnummer AID welche die Telekommunikationsanlage des Zielteilnehmers im Verbund identifiziert, aus der Zielrufnummer des Anrufs.

11. Verfahren nach Anspruch 10, mit dem weiteren Verfahrensschritt
- Ermittlung (120), ob das rufende Endgerät und das gerufene Endgerät zum selben Kunden gehören.

12. Verfahren nach Anspruch 10 oder 11, mit dem weiteren Verfahrensschritt
- Ermittlung (155), ob eine Vermittlung zwischen dem rufenden Endgerät und dem gerufenen Endgerät verbundintern erfolgen darf.

13. Verfahren nach einem der Ansprüche 10 bis 12, mit dem weiteren Verfahrensschritt
- Ableiten (105, 205, 310, 315) der Absender-KID aus der E.164 Rufnummer (bzw. auswertungsrelevanter Teile davon) des Absenders und der Ziel- KID aus der E.164 Rufnummer (bzw. auswertungsrelevanter Teile davon)des Zielendgerätes.

14. Verfahren nach einem der Ansprüche 10 bis 13, mit dem weiteren Verfahrensschritt
- Ermittlung (115, 205, 315) einer Anlagenidentifikationsnummer AID, welche die Telekommunikationsanlage des Zielteilnehmers im Verbund identifiziert, aus der Zielrufnummer des Anrufs;

15. Verfahren nach Anspruch 14, mit dem weiteren Verfahrensschritt
- Prüfung (125, 215, 345) ob die AID des Zielteilnehmers mit der AID der prüfenden Telekommunikationsanlage identisch ist.

16. Verfahren nach einem der Ansprüche 14 bis 15, wobei die Ermittlung der KID mit Hilfe von in einer Telekommunikationsanlage gespeicherten Dispatcher-Nummern, nämlich denjenigen Teilen von E.164-Rufnummem von an Telekommunikationsanlagen des Verbundes angeschlossenen Teilnehmern, die zur Bestimmung von AID und KID erforderlich sind, anhand von Teilen einer mit dem Anruf übermittelten Rufnummer erfolgt.

17. Verfahren nach einem der Ansprüche 14 bis 16, wobei verbundinterner kundenübergreifender Verkehr kundenindiviuell tarifiert wird.

18. Verfahren nach einem der Ansprüche 14 bis 16, wobei verbundinterner kundeninterner Verkehr kundenindiviuell tarifiert wird

19. Software, die, wenn sie auf einem Computer in einer privaten Telekommunikationsanlage läuft, eine Identifizierung eines Kunden und einer Telekommunikationsanlage in einem Verbund aus Telekommunikationsanlagen anhand einer dem Kunden zugeordneten Kundenidentifikationsnummer KID und einer der Telekommunikationsanlage zugeordneten AID durchführt, wobei die Identifizierung von Kunde und Telekommunikationsanlage mit Hilfe von in einer Telekommunikationsanlage gespeicherten Dispatcher-Nummern, nämlich denjenigen Teilen von E.164-Rufnummern von an einer Telekommunikationsanlage im Verbund angeschlossenen Teilnehmern, die zur Bestimmung der Anlagenidentifikationsnummer AID, welche die Telekommunikationsanlage der jeweiligen E.164-Rufnummern im Verbund identifiziert, und der KID im Verbund erforderlich sind, anhand einer mit dem Anruf übermittelten Rufnummer erfolgt.

## Claims

1. A private telecommunications switching system (10, A1, A2, A3, A4, A5) in a compound system with at least one additional private telecommunications switching system, **characterized by** a storage for storing data of subscribers connected to the at least one additional telecommunications switching system of the compound system, of customers using the compound system jointly and independently of each other, namely a system identification number AID of the additional switching system to which the respective subscriber with the respective call number is connected, and a customer identification number KID identifying the customer of the respective subscriber, as well as those parts of call numbers of subscribers connected to every additional switching system, which are required to determine the AID and the KID, and a dispatcher for determining a KID and/or an AID from parts of call numbers.

2. A compound system (90) consisting of at least two private telecommunications switching systems (A1, A2, A3, A4, A5), including at least one private telecommunications switching system according to claim 1 or 2.

3. The compound system consisting of private telecommunications switching systems according to claim 2, wherein at least one private telecommunications switching system of the compound system includes a customer-to-customer routing table showing for each customer identification number KID those customer identification numbers KID for whose assigned subscribers of the customers, a traffic internal to the compound system between the subscribers of the customers is allowed.

4. A method for configuring a compound system (90) consisting of private telecommunications switching systems (A1, A2, A3, A4, A5), wherein several customers, each with a plurality of terminals, use the compound system independently of each other, with the following method steps in at least one switching system of the compound system:
- assigning (91) a system identification number AID with each switching system in the compound system;
- assigning (92) a customer identification number KID with each customer in the compound system;
- storing (93) those parts of E.164 call number of subscribers connected to their own switching system and to additional switching systems, which are required to determine the AID and the KID, as dispatcher numbers;
- assigning (93) the AID and the KID to the dispatcher numbers.

5. The method of claim 4, with the additional method step:
- creating (95) a customer-to-customer routing table including for each customer identification number KID those customer identification numbers KID for which a traffic internal to the compound system between the subscribers of the customers is allowed.

6. The method of any of claims 4 and 5, with the additional method step, in each switching system of the compound system:
- assigning (96) those switching systems of the compound system, via the system identification number AID, with a trunk line, which can be reached via this trunk line.

7. The method of any of claims 4 to 6, wherein a transmission capacity is reserved for a customer, via the latter's KID, on a trunk line to another switching system of the compound system.

8. The method of any of claims 4 to 7, wherein the compound system is configured such that in case of a cross-customer traffic not internal to the compound system, all switching systems of the compound system are able to determine both the KID and the AID of the calling party and of the called party.

9. The method of any of claims 4 to 7, wherein at least one of the additional switching systems is a conventional private branch exchange with subscribers of a single customer.

10. A method for operating a compound system (90) consisting of private telecommunications switching systems (A1, A2, A3, A4, A5), connected with each other via trunk lines, wherein several customers with assigned customer identification numbers KID, each with a plurality of terminals, use the compound system independently of each other, with the method steps:
- receiving (100, 200, 300) a call;
- determining (105, 205, 310, 315) a customer identification number KID from a call number transmitted with the call;
- assigning (110, 212, 325, 335) the call with the determined customer identification number KID;
- determining (115, 205, 315) a system identification number AID identifying the telecommunications switching system of the destination subscriber in the compound system, from the destination call number of the call.

11. The method of claim 10, with the additional method step:
- determining (120) whether the calling terminal and the called terminal belong to the same customer.

12. The method of claim 10 or 11, with the additional method step:
- determining (155) whether a switching between the calling terminal and the called terminal is allowed internally to the compound system.

13. The method of any of claims 10 to 12, with the additional method step:
- deriving (105, 205, 310, 315) the sender KID from the E.164 call number (or from evaluation-relevant parts thereof) of the sender and the destination KID from the E.164 call number (or from evaluation-relevant parts thereof) of the destination terminal.

14. The method of any of claims 10 to 13, with the additional method step:
- determining (115, 205, 315) of a system identification number AID identifying the telecommunications switching system of the destination subscriber in the compound system, from the destination call number of the call.

15. The method of claim 14, with the additional method step:
- examining (125, 215, 345) whether the AID of the destination subscriber is identical with the AID of the examining telecommunications switching system.

16. The method of any of claims 14 to 15, wherein the KID is determined with the help of dispatcher numbers stored in a telecommunications switching system, namely those parts of E.164 call numbers of subscribers connected to telecommunications switching systems of the compound system which are required for determining the AID and the KID, by means of parts of a call number transmitted with the call.

17. The method of any of claims 14 to 16, wherein the tariff of a cross-customer traffic internal to the compound system is fixed individually for each customer.

18. The method of any of claims 14 to 16, wherein the tariff of a traffic internal to the customer and internal to the compound system is fixed individually for each customer.

19. A software which, when executed on a computer in a private telecommunications switching system, identifies a customer and a telecommunications switching system in a compound system of telecommunications switching systems by means of a customer identification number KID assigned with the customer and a system identification number AID assigned with the telecommunications switching system, the identification of the customer and of the telecommunications switching system being effected by means of dispatcher numbers stored in a telecommunications switching system, namely those parts of E.164 call numbers of subscribers connected to a telecommunications switching system in the compound system, which are required to determine the system identification number AID identifying the telecommunications switching system of the respective E.164 call numbers in the compound system and the KID in the compound system, by means of a call number transmitted with the call.

## Revendications

1. Système de commutation de télécommunication privé (10, A1, A2, A3, A4, A5) dans un système composé avec au moins un système de commutation de télécommunication privé additionnel, **caractérisé par** une mémoire pour mémoriser des données d'abonnés connectés au, au moins un, système de commutation de télécommunication additionnel du système composé, de clients utilisant le système composé en commun et indépendamment l'un de l'autre, à savoir un numéro d'identification de système AID du système de commutation additionnel auquel l'abonné respectif avec le numéro d'appel respectif est connecté, et un numéro d'identification de client KID identifiant le client de l'abonné respectif, ainsi que les parties de numéros d'appel d'abonnés connectés à chaque système de commutation additionnel, qui sont nécessaires à déterminer l'AID et le KID, et un dispatcher pour déterminer un KID et/ou un AID à partir des parties de numéros d'appel.

2. Système composé (90) se composant d'au moins deux systèmes de commutation de télécommunication privés (A1, A2, A3, A4, A5), comprenant au moins un système de commutation de télécommunication privé d'après la revendication 1 ou 2.

3. Système composé se composant de systèmes de commutation de télécommunication privés d'après la revendication 2, dans lequel au moins un système de commutation de télécommunication privé du système composé comprend un tableau routing client-à-client montrant pour chaque numéro d'identification de client KID les numéros d'identification de client KID pour les abonnés des clients affectés desquels un trafic interne au système composé entre les abonnés des clients est permis.

4. Procédé pour configurer un système composé (90) se composant de systèmes de commutation de télécommunication privés (A1, A2, A3, A4, A5), dans lequel plusieurs clients, chacun avec une pluralité de terminaux, utilisent le système composé indépendamment l'un de l'autre, avec les pas de procédé suivants dans au moins un système de commutation du système composé:
- affectation (91) d'un numéro d'identification de système AID à chaque système de commutation dans le système composé;
- affectation (92) d'un numéro d'identification de client KID à chaque client dans le système composé;
- mémorisation (93) des parties des numéros d'appel E.164 d'abonnés connectés à leur propre système de commutation et à des systèmes de commutation additionnels, qui sont nécessaires à déterminer l'AID et le KID, comme des numéros de dispatcher;
- affectation (93) de l'AID et du KID aux numéros de dispatcher.

5. Procédé d'après la revendication 4, avec le pas de procédé additionnel:
- création (95) d'un tableau routing client-à-client comprenant pour chaque numéro d'identification de client KID les numéros d'identification de client KID pour lesquels un trafic interne au système composé entre les abonnés des clients est permis.

6. Procédé d'après l'une quelconque des revendications 4 et 5, avec le pas de procédé additionnel, dans chaque système de commutation du système composé:
- affectation (96) des systèmes de commutation du système composé, au moyen du numéro d'identification de système AID, à une ligne de jonction, qui peuvent être atteints à l'aide de cette ligne de jonction.

7. Procédé d'après l'une quelconque des revendications 4 à 6, dans lequel une capacité de transmission est réservée pour un client, au moyen du KID de celui-ci, sur une ligne de jonction à un autre système de commutation du système composé.

8. Procédé d'après l'une quelconque des revendications 4 à 7, dans lequel le système composé est configuré de façon que dans le cas d'un trafic pluri-client non interne au système composé, tous les systèmes de commutation du système composé sont capable de déterminer et le KID et l'AID de l'appelant et de l'appelé.

9. Procédé d'après l'une quelconque des revendications 4 à 7, dans lequel au moins un des systèmes de commutation additionnels est une installation téléphonique privée conventionnelle avec des abonnés d'un seul client.

10. Procédé pour exploiter un système composé (90) se composant de systèmes de commutation de télécommunication privés (A1, A2, A3, A4, A5), connectés l'un avec l'autre par des lignes de jonction, dans lequel plusieurs clients avec des numéros d'identification de client KID affectés, chacun avec une pluralité de terminaux, utilisent le système composé indépendamment l'un de l'autre, avec les pas de procédés suivants:
- réception (100, 200, 300) d'un appel;
- détermination (105, 205, 310, 315) d'un numéro d'identification de client KID à partir d'un numéro d'appel transmis avec l'appel;
- affectation (110, 212, 325, 335) de l'appel au numéro d'identification de client KID déterminé;
- détermination (115, 205, 315) d'un numéro d'identification de système AID identifiant le système de commutation de télécommunication de l'abonné de destination dans le système composé, à partir du numéro d'appel de destination de l'appel.

11. Procédé d'après la revendication 10, avec le pas de procédé additionnel:
- détermination (120) si le terminal appelant et le terminal appelé appartiennent au même client.

12. Procédé d'après la revendication 10 ou 11, avec le pas de procédé additionnel:
- détermination (155) si une commutation entre le terminal appelant et le terminal appelé est permise internement au système composé.

13. Procédé d'après l'une quelconque des revendications 10 à 12, avec le pas de procédé additionnel:
- dérivation (105, 205, 310, 315) du KID de l'expéditeur à partir du numéro d'appel E.164 (ou à partir de parties de celui-ci relevantes pour l'évaluation) de l'expéditeur et à partir du KID de destination à partir du numéro d'appel E.164 (ou à partir de parties de celui-ci relevantes pour l'évaluation) du terminal de destination.

14. Procédé d'après l'une quelconque des revendications 10 à 13, avec le pas de procédé additionnel:
- détermination (115, 205, 315) d'un numéro d'identification de système AID identifiant le système de commutation de télécommunication de l'abonné de destination dans le système composé, à partir du numéro d'appel de destination de l'appel.

15. Procédé d'après la revendication 14, avec le pas de procédé additionnel:
- examen (125, 215, 345) si l'AID de l'abonné de destination est identique à l'AID du système de commutation de télécommunication examinant.

16. Procédé d'après l'une quelconque des revendications 14 à 15, dans lequel le KID est déterminé à l'aide de numéros de dispatcher mémorisés dans un système de commutation de télécommunication, à savoir les parties de numéro d'appel E.164 d'abonnés connectés à des systèmes de commutation de télécommunication du système composé qui sont nécessaires à déterminer l'AID et le KID, au moyen de parties d'un numéro d'appel transmis avec l'appel.

17. Procédé d'après l'une quelconque des revendications 14 à 16, dans lequel le trafic pluri-client interne au système composé est tarifé individuellement pour chaque client.

18. Procédé d'après l'une quelconque des revendications 14 à 16, dans lequel le trafic internal au client et interne au système composé est tarifé individuellement pour chaque client.

19. Logiciel qui, quand il tourne sur un ordinateur dans un système de commutation de télécommunication privé, identifie un client et un système de commutation de télécommunication dans un système composé de systèmes de commutation de télécommunication au moyen d'un numéro d'identification de client KID affecté au client et d'un numéro d'identification de système AID affecté au système de commutation de télécommunication, l'identification du client et du système de commutation de télécommunication étant effectuée à l'aide de numéros de dispatcher mémorisés dans un système de commutation de télécommunication, à savoir les parties de numéros d'appel E.164 d'abonnés connectés à un système de commutation de télécommunication du système composé, qui sont nécessaires à déterminer le numéro d'identification de système AID identifiant le système de commutation de télécommunication des numéros d'appel E.164 respectifs dans le système composé et à déterminer le KID dans le système composé, au moyen d'un numéro d'appel transmis avec l'appel.
